# EUROPÄISCHE PATENTSCHRIFT

(11) **EP 2 118 527 B1**
(45) Veröffentlichungstag und Bekanntmachung des Hinweises auf die Patenterteilung: **05.12.2012**
(21) Anmeldenummer: 08708178.2
(22) Anmeldetag: 25.01.2008
(51) Int. Cl.: F16H 61/04

(54) **VERFAHREN ZUM BETREIBEN EINES ANTRIEBSSTRANGES EINES FAHRZEUGS**
METHOD FOR OPERATING A DRIVETRAIN OF A VEHICLE
PROCÉDÉ DESTINÉ À FAIRE FONCTIONNER LA CHAÎNE CINÉMATIQUE D'UN VÉHICULE

(30) Priorität: 14.02.2007 DE 102007007257
(43) Veröffentlichungstag der Anmeldung: 18.11.2009
(73) Patentinhaber: ZF Friedrichshafen AG, 88038 Friedrichshafen (DE)
(72) Erfinder: STEINBORN, Mario, 88046 Friedrichshafen (DE); REITH, Ulrich, 88281 Schlier (DE)
(86) Internationale Anmeldenummer: PCT/EP2008/050839
(87) Internationale Veröffentlichungsnummer: WO 2008/098824

(56) Entgegenhaltungen:
- EP-A- 1 548 332
- WO-A-2006/089669
- DE-A1- 10 124 989
- DE-A1- 19 530 233
- DE-A1- 19 901 414

## Beschreibung

Die Erfindung betrifft ein Verfahren zum Betreiben eines Antriebsstranges eines Fahrzeugs gemäß dem Oberbegriff des Patentanspruchs 1, einen Antriebsstrang gemäß dem Oberbegriff des Patentanspruchs 10 sowie ein Fahrzeug mit einem solchen Antriebsstrang.

Die Verwendung elektrischer Maschinen in Antriebssträngen von Fahrzeugen, insbesondere in Kraftfahrzeugen, ist bereits bekannt. Sie können vielfältige Funktionen, wie beispielsweise als Antriebsaggregate in Hybridsystemen, Zusatzantriebe für Allradantriebe, Gangantriebe zur Realisierung von Rückwärtsgängen, Startermotoren für Verbrennungsmotoren, Anfahrhilfen, elektrodynamische Retarder, Pumpenantriebe zur Schmier- und Kühlölversorgung oder Generatoren in Rekuperationseinrichtungen erfüllen. Weiterhin ist es bekannt, elektrische Maschinen auch zur Synchronisation in Schaltgetrieben einzusetzen, um auf die üblichen Synchronisier-Vorrichtungen mit Reibelementen wenigstens teilweise verzichten zu können, um so Herstellkosten und Bauraum einzusparen, Schaltzeiten zu verkürzen und den Schaltkomfort zu verbessern.

Aus der gattungsbilden der DE 10 2005 007 966 A1 ist ein solcher Antriebsstrang eines Kraftfahrzeugs sowie ein Verfahren zu dessen Betrieb bekannt. Darin ist ein Elektromotor in einer Antriebsstrang-Anordnung in Kraftflussrichtung bestehend aus Verbrennungsmotor - Motorkupplung - Elektromotor - Eingangswelle Schaltgetriebe/Schaltgetriebe - Achsgetriebe vorgesehen, der unter anderem zur Synchronisierung der Schaltungen im Schaltgetriebe einsetzbar ist, wobei der Elektromotor beispielsweise bei geöffneter Motorkupplung und Neutralstellung des Getriebes eine Synchrondrehzahl zwischen der Getriebewelle und dem jeweils zu schaltenden Gangzahnrad herbeiführt, bevor der jeweils angewählte Zielgang geschaltet wird. In dieser Druckschrift wird weiterhin erwähnt, dass bei einem unsynchronisierten Mehrgruppengetriebe die Synchronisierung mittels des Elektromotors durch eine mehrfach wiederholte Herstellung einer Synchrondrehzahl durchgeführt werden kann. Eine weitere Beschreibung dazu findet sich jedoch nicht in dieser Druckschrift.

Weiterhin ist die Verwendung von Elektromaschinen in Doppelkupplungsgetrieben bekannt. In der nicht vorveröffentlichten DE 10 2006 036 758.8 der Anmelderin ist ein automatisiertes Doppelkupplungsgetriebe in Vorgelegebauweise beschrieben, mit zwei Getriebeeingangswellen, denen jeweils eine Gruppe von Gang-Zahnradsätzen und ein Anfahrelement zugeordnet ist, sowie mit als unsynchronisierte Gangkupplungen ausgebildeten Schaltelementen. Die beiden als Doppelkupplungseinheit ausgeführten Anfahrelemente sind als unsynchronisierte Motorkupplungen in Klauenbauweise ausgebildet. Sie sind getriebeseitig jeweils mit einer zugeordneten Eingangswelle verbunden und antriebsseitig wechselweise mit der Kurbelwelle eines Verbrennungsmotors verbindbar. Den beiden Eingangswellen ist entweder jeweils eine Elektromaschinen, deren Rotor über ein Ritzel mit dem Festrad des größten Ganges der jeweiligen Ganggruppe im Eingriff steht oder eine gemeinsame elektrische Maschine, die wechselweise mit den Gangrädern wirkverbindbar ist, zugeordnet.

Die elektrische Maschine ist als Anfahr- und Synchronisiermittel wirksam. Bei einem Anfahrvorgang wird nach dem Einrücken der Gangkupplung des Anfahrganges das Fahrzeug mittels der Elektromaschine zunächst soweit beschleunigt, bis beim Erreichen einer Synchrondrehzahl der Antriebswelle die betreffende Motorkupplung eingerückt werden kann. Bei einem Gangwechsel wird zunächst bei geöffneter Motorkupplung des Zielganges die Eingangswelle des Zielganges mittels der zugeordneten Elektromaschine soweit beschleunigt, bis bei Erreichen einer Synchrondrehzahl die Gangkupplung des Zielgangs eingerückt werden kann, worauf die Elektromaschine die sich aufbauende Last temporär übernimmt, bis die Motorkupplung des Ursprungsganges ausgerückt, der Ursprungsgang ausgelegt und der Antriebsmotor mittels einer Steuerung auf die neue Synchrondrehzahl gesteuert ist, so dass dann die Motorkupplung des Zielgangs eingerückt werden kann. Weiterhin kann mittels der zumindest einen elektrischen Maschine ein Rückwärtsgang durch Umkehren der Rotordrehrichtung der Elektromaschine in Wirkverbindung mit einem Zahnradsatz für einen Vorwärts - Anfahrgang realisiert werden.

Aus der DE 101 33 695 A1 ist ein weiteres Doppelkupplungsgetriebe bekannt, bei dem zumindest eine Getriebeeingangswelle mit einer elektrischen Maschine verbindbar ist. Während eines Schaltvorgangs kann zur Synchronisierung die Getriebeeingangswelle mittels der elektrischen Maschine beschleunigt oder insbesondere bei einem Herunterschalten in den kleinsten Gang abgebremst werden. Dabei kann die Elektromaschine mit vorhandenen Synchronisiereinrichtungen zusammenwirken.

Die erwähnten Druckschriften offenbaren eine Vielfalt von Verwendungsmöglichkeiten von elektrischen Maschinen in Fahrzeug - Antriebssträngen insbesondere zur Synchronisierung in herkömmlichen Schaltgetrieben und Doppelkupplungsgetrieben auf und sind in der Lage, die ihnen zugrunde liegenden Aufgaben in vollem Umfang zu erfüllen. Nachteilig ist, dass der Fachmann darin keine oder zumindest nur unzureichende Hinweise auf Vorgehensweisen zur Anwendung von elektrischen Maschinen bei problematischen und/oder vergleichsweise komplexen Schaltvorgängen findet.

Vor diesem Hintergrund liegt der Erfindung die Aufgabe zugrunde, ein Verfahren zum Betreiben eines Antriebsstranges in einem Fahrzeug anzugeben und einen Antriebsstrang dafür so weiterzuentwickeln, dass die Funktionsmöglichkeiten einer dem Antriebsstrang zugeordneten elektrischen Maschine, insbesondere zur Synchronisierung während Schaltvorgängen, verbessert und erweitert werden.

Die Lösung dieser Aufgabe ergibt sich aus den Merkmalen der unabhängigen Patentansprüche, während vorteilhafte Ausgestaltungen und Weiterbildungen der Erfindung den zugeordneten Unteransprüchen entnehmbar sind.

Der Erfindung liegt die Erkenntnis zugrunde, dass es einerseits in Schaltgetrieben zu irregulären Drehrichtungswechseln von Getriebewellen kommen kann, die einen Schaltvorgang unmöglich machen oder zumindest erschweren bzw. verzögern können, und andererseits, dass eine elektrische Maschine im Antriebsstrang durch eine entsprechende Ansteuerung in beiden Drehrichtungen betrieben werden kann, so dass mit Hilfe dieser elektrischen Maschine ebenfalls die Drehrichtung dieser und/oder anderer mit ihr wirkverbindbare Getriebewellen beeinflusst werden kann, wodurch gewünschte Schaltungen in bestimmten Betriebssituationen erst ermöglicht oder zumindest synchronisierte Schaltungen verbessert werden können.

Demnach geht die Erfindung aus von einem Verfahren zum Betreiben eines Antriebsstranges eines Fahrzeugs, mit einer Anordnung wenigstens umfassend einen Verbrennungsmotor, eine Motorkupplung, eine elektrische Maschine, ein Schaltgetriebe zum Schalten von Gängen in Ein- oder Mehrgruppenbauweise mit synchronisierten und/oder unsynchronisierten Schaltelementen, ein Achsgetriebe sowie eine zugeordnete Steuerungseinrichtung zur Steuerung von Schaltvorgängen.

Zur Lösung der gestellten Aufgabe sieht die Erfindung vor, dass die elektrische Maschine bei Schaltvorgängen im Schaltgetriebe als Synchronisiermittel, Synchronisierhilfe oder wenigstens als Schalthilfe eingesetzt wird, wobei Drehrichtungswechsel von Getriebewellen berücksichtigt werden.

Weiterhin geht die Erfindung aus von einem Antriebsstrang eines Fahrzeugs, wenigstens umfassend einen Verbrennungsmotor, eine Motorkupplung, eine elektrische Maschine, ein Schaltgetriebe zum Schalten von Gängen in Ein-oder Mehrgruppenbauweise mit synchronisierten und/oder unsynchronisierten Schaltelementen, ein Achsgetriebe sowie eine zugeordnete Steuerungseinrichtung zur Steuerung von Schaltvorgängen. Zudem sieht die Erfindung bei diesem Antriebsstrang vor, dass die elektrische Maschine bei einem Drehrichtungswechsel einer oder mehrerer Getriebewellen während eines Schaltvorganges als Synchronisiermittel, Synchronisierhilfe oder wenigstens als Schalthilfe entsprechend ansteuerbar und mit jeweiligen, aufgrund des Drehrichtungswechsels zu beaufschlagenden Getriebewellen über vorgesehene kraftschlüssige Verbindungsmittel wirkverbindbar ist.

Dieser Antriebsstrang ist besonders gut zur Durchführung des erfindungsgemäßen Verfahrens in einem diesbezüglichen Fahrzeug geeignet.

Durch das Verfahren wird vorteilhaft eine Funktionserweiterung für Schaltungen in Schaltgetrieben in Fahrzeug-Antriebssträngen mit elektrischen Maschinen zur Verfügung gestellt. Grundsätzlich ist das Verfahren für alle Arten von Schaltgetrieben in Ein- oder Mehrgruppenbauweise mit Einfachkupplung oder Doppelkupplung und einer oder mehreren in geeigneter Weise über eine Steuerungseinrichtung ansteuerbare elektrische Maschine mit Motorfunktion und gegebenenfalls Generatorfunktion geeignet.

Bei einer besonders vorteilhaften Anwendung des Verfahrens kann vorgesehen sein, dass bei einem durch ein unerwünschtes Rollen des Fahrzeugs entgegen einer angewählten Gang- bzw. Fahrtrichtung hervorgerufenen Drehrichtungswechsel einer Getriebeausgangswelle, zunächst die Drehrichtung wenigstens einer anderen, mit der Getriebeausgangswelle zu korrelierenden, in der ursprünglichen Drehrichtung laufenden, Getriebewelle mittels der elektrischen Maschine an die Drehrichtung der Getriebeausgangswelle angeglichen wird.

Ein derartiges Szenario kommt relativ häufig bei Off-road - Anwendungen vor, wenn das Fahrzeug an einer starken Steigung fährt und zurückrollt, während das Schaltgetriebe im Laufe einer Schaltung in Neutralstellung ist, wobei die mit den Antriebsrädern verbundene Getriebeausgangswelle ihre Drehrichtung wechselt. Ein vergleichbares Szenario für Anfahrvorgänge, insbesondere bei schweren Nutzfahrzeugen, ist auch in der nicht vorveröffentlichten DE 10 2006 030 157.9 der Anmelderin beschrieben.

Bei Schaltgetrieben mit Synchronisierungseinrichtung kann ein Drehrichtungswechsel der Getriebeausgangswelle das Einrücken eines Ganges erschweren, wobei es zumindest zu einer erhöhten Belastung der betreffenden Synchronbauteile kommt. Bei Getrieben ohne Synchronisierungseinrichtung ist es eher wahrscheinlich, dass das zu schaltende Gangrad gar nicht synchronisiert werden kann und ein Einrücken des angewählten Zielganges verunmöglicht wird. In der Folge müsste das Fahrzeug zunächst zum Stillstand gebracht werden, um anschließend einen Anfahrvorgang bzw. einen erneuten Anfahrvorgang einzuleiten.

Bei einem erkannten derartigen, an sich irregulären Betriebszustand, kann mit dem erfindungsgemäßen Verfahren die elektrische Maschine hingegen die Drehrichtung der in der ursprünglichen Richtung laufenden, zu korrelierenden Wellen, in kürzester Zeit ebenfalls umkehren, wodurch eine bauteilschonendere Synchronisierung bei Getrieben mit Synchronbauteilen ermöglicht wird. Unmittelbar anschießend könnte das Fahrzeug dann durch Schließen der Motorkupplung abgefangen und die Fahrtrichtung des Fahrzeugs bei temporärem Drehzahlabfall des Verbrennungsmotors in die angewählte Richtung umgekehrt werden, zumindest solange eine dabei entstehende Kupplungsbelastung in einem zulässigen Bereich bleibt. Bei Getrieben ohne Synchronbauteile könnte die elektrische Maschine auf diese Weise das Schalten eines Ganges in einer derartigen Situation überhaupt erst ermöglichen, ohne das Fahrzeug bis zum Stillstand abbremsen zu müssen.

Weiterhin kann die elektrische Maschine besonders vorteilhaft zur Synchronisierung in einem Mehrgruppengetriebe, beispielsweise in einem Dreigruppengetriebe mit einer vorgeschalteten Splitgruppe, einer mittleren Hauptgruppe und einer nachgeschalten Bereichsgruppe, eingesetzt und bei einem Drehrichtungswechsel zur Drehrichtungsumkehr von in der ursprünglichen Richtung laufenden Wellen angesteuert werden. Der grundsätzliche Aufbau derartiger drei Getriebegruppen - ohne elektrische Maschine - ist beispielsweise aus der nicht vorveröffentlichten DE 10 2006 024 370.6 der Anmelderin bekannt.

Dabei erfolgt die Getriebesynchronisierung mit der elektrischen Maschine in den Gruppen vergleichsweise schnell, so dass insgesamt sehr kurze Schaltzeiten erreicht werden und auf herkömmliche Synchronisierungseinrichtungen sogar in allen Gruppen verzichtet werden kann, welches sich besonders kosten- und bauraumsparend auswirkt. Grundsätzlich ist es auch möglich, nur eine oder zwei Gruppen ohne Synchronelemente auszubilden oder bei einem vollständig synchronisierten Getriebe die elektrische Maschine als zusätzliche Synchronisierhilfe zuzuschalten, beispielsweise zur Drehrichtungsumkehr der mit der Getriebeausgangswelle zu korrelierenden Wellen bei einem irregulären Drehrichtungswechsel mit einer entsprechenden Bestromung und Rotordrehrichtung der Elektromaschine.

Im einfachsten Fall kann dazu ein serieller Schaltablauf vorgesehen sein, bei dem zunächst ein Lastabbau mit Öffnen der Motorkupplung und Auslegen eines Ursprungsganges erfolgt, anschließend die einzelnen Gruppen jeweils ausgeschaltet, mittels der elektrischen Maschine synchronisiert und wieder eingeschaltet werden, und abschließend ein Einlegen eines Zielganges mit Schließen der Motorkupplung und einem Lastaufbau erfolgt, wobei bei einem Dreigruppengetriebe im Einzelnen die folgenden Schritte durchgeführt werden:
- Lastabbau mit Öffnen der Motorkupplung und Auslegen eines Ursprungsgangs,
- Ausschalten der Splitgruppe,
- Synchronisieren der Splitgruppe,
- Einschalten der Splitgruppe,
- Ausschalten der Hauptgruppe,
- Synchronisieren der Hauptgruppe,
- Einschalten der Hauptgruppe,
- Ausschalten der Bereichsgruppe,
- Synchronisieren der Bereichsgruppe,
- Einschalten der Bereichsgruppe und
- Einlegen eines Zielgangs mit Schließen der Motorkupplung und Lastaufbau.

Unter Einschalten und Ausschalten des jeweiligen Teilgetriebes ist die antriebstechnische Einkopplung bzw. Auskopplung desselben in bzw. aus dem gemeinsamen Antriebsstrang gemeint.

Da bei einer Schaltung in einem derartigen Mehrgruppengetriebe bei einem Gangwechsel die Schaltrichtungen innerhalb der Gruppen differieren können, d.h. in einer oder mehreren Gruppen kann eine Rückschaltung erfolgen, in einer oder mehreren anderen Gruppen hingegen eine Hochschaltung, ist es zur Erzielung eines effektiven Schaltablaufs mit einer besonders kurzen Schaltzeit besonders vorteilhaft, nach vorbestimmten Kriterien vorzugehen und die Motorkupplung, die zu schaltenden elektrischen/hydraulischen/pneumatischen Schaltelemente und die elektrische Maschine über eine Getriebesteuerung entsprechend anzusteuern.

Als sinnvolle Kriterien für einen diesbezüglich optimalen Schaltablauf können vorgesehen sein:
- eine durchzuführende Anzahl von Drehrichtungsumkehrungen von Getriebewellen mittels der elektrischen Maschine,
- die Größe eines jeweils mittels der elektrischen Maschine zu synchronisierenden Drehzahlbereichs,
- die Größe eines jeweiligen Drehzahlsprungs,
- die Richtung eines jeweiligen Drehzahlsprungs und
- das Drehzahlniveau selbst.

Demnach wird ein Schaltablauf vorteilhaft so durch geführt, dass so wenig wie möglich Drehrichtungsumkehrungen stattfinden und/oder die Synchronbereiche für die elektrische Maschine möglichst klein sind und/oder ein möglichst großer fallender Drehzahlsprung zuerst synchronisiert wird, d.h. die Gruppen mit Hochschaltung werden mit Priorität synchronisiert und geschaltet, und/oder die Synchronisierungen werden bei einem möglichst niedrigen Drehzahlniveau durchgeführt.

Außerdem kann vorgesehen sein, dass bei bestimmten Synchronisierungen die Motorkupplung wahlweise vollständig oder teilweise geschlossen wird oder vollständig oder teilweise geschlossen bleibt, wodurch der Schaltkomfort erhöht werden kann. Dies ist insbesondere bei Hochschaltungen von Vorteil, wobei der Verbrennungsmotor durch die kraft-/reibschlüssige Verbindung über die schlupfende bzw. geschlossene Motorkupplung mitsynchronisiert wird.

Zur weiteren Schaltzeitverbesserung können aufeinander folgende Einschalt- und Ausschaltphasen der Gruppen des Mehrgruppengetriebes bei einem Schaltablauf wahlweise voneinander getrennt oder zeitlich überschneidend erfolgen.

Bei Schaltabläufen in derartigen Schaltgetrieben können Zahn-auf-Zahn-Stellungen von zu schaltenden Zahnrädern vorkommen. Zur Vermeidung von Beeinträchtigungen des Kraftflusses im Schaltgetriebe und Erhöhung der Schaltsicherheit wird daher bei auftretenden Zahn-auf-Zahn-Stellungen zweckmäßigerweise die Schaltung fortgesetzt, d.h. in der betreffenden Gruppe des Mehrgruppengetriebes wird die elektrische Maschine weiterhin bzw. verändert so angesteuert und betrieben, bis die entsprechenden Zahnräder regulär im Eingriff sind und die jeweilige Zahn-auf-Zahn-Stellung beseitigt ist.

Zusammenfassend formuliert kann durch die Erfindung bei einem unbeabsichtigten Vor- oder Zurückrollen während der Fahrt bei einer Schaltung in einem Ein- oder Mehrgruppengetriebe oder bei einem Anfahrvorgang beim Einlegen eines Anfahrganges, bei dem zumindest eine Getriebewelle ihre Drehrichtung wechselt, vorzugsweise durch eine Drehrichtungsumkehr der in der ursprünglichen Richtung laufenden Wellen mit Hilfe der elektrischen Maschine ein besonders getriebeschonender Fahrbetrieb sowie eine erhöhte Schaltsicherheit erreicht werden, wobei der Schaltablauf mittels einer schnellen Synchronisierung nur eine vergleichsweise sehr kurze Schaltzeit in Anspruch nimmt, so dass das Fahrzeug während der Schaltung oder unmittelbar darauf folgend mittels der Motor- bzw. Anfahrkupplung abgefangen werden kann.

Das Verfahren wird im Folgenden am Beispiel eines Mehrgruppengetriebes ohne Synchronisiereinrichtung (oder zumindest mit einer unsynchronisierten Hauptgruppe), wie beispielsweise einem zwölfgängigen Getriebe aus der bekannten "ZF-AS Tronic" - Baureihe der Anmelderin, mit einer vorgeschalteten zweigängigen Splitgruppe (GV) und einer dreigängigen mittleren Hauptgruppe (HG) in Vorgelegebauweise sowie einer nachgeschalten zweigängigen Bereichsgruppe (GP) in Planetenbauweise, erläutert. Ein derartiges Getriebe und dessen Funktionsweise sowie die Anordnung einer als Elektromotor und als Generator betreibbaren elektrischen Maschine in einem Antriebsstrang ist dem Fachmann bekannt. Daher wird hier auf eine eingehende Beschreibung des Getriebes verzichtet und lediglich auf einen für das erfindungsgemäße Verfahren beispielhaften Schaltvorgang mit einem Drehrichtungswechsel einer Getriebewelle näher eingegangen.

Dazu wird ein Schaltvorgang von einem 6. Vorwärtsgang als Ursprungsgang in einen 7. Vorwärtsgang als Zielgang angenommen. Dabei ergibt sich für die Hauptgruppe (HG) und die Splitgruppe (GV) eine Rückschaltung und für die Bereichsgruppe (GP) eine Hochschaltung.

Demnach kann der Gangwechsel von 6. Gang nach 7. Gang unter Berücksichtigung der oben erläuterten Kriterien nach folgenden drei Schemata beispielhaft ablaufen, wobei mit der hochzuschaltenden Bereichsgruppe begonnen wird und die benachbarten Einschalt- und Ausschaltphasen vorteilhaft überschneidend stattfinden können:
I. Schaltablauf:
   1. Lastabbau mit Öffnen der Motorkupplung,
   2. Bereichsgruppe GP:
      i. Ausschalten,
      ii. Synchronisieren, Drehzahl der Elektromaschine fällt aufgrund der Hochschaltung,
      iii. Einschalten,
   3. Hauptgruppe HG:
      i. Ausschalten,
      ii. Synchronisieren, Drehzahl der Elektromaschine steigt aufgrund der Rückschaltung,
      iii. Einschalten,
   4. Splitgruppe GV:
      i. Ausschalten,
      ii. Synchronisieren, Drehzahl der Elektromaschine steigt aufgrund der Rückschaltung,
      iii. Einschalten,
   5. Motorkupplung schließen und Lastaufbau, Drehzahl des Verbrennungsmotors fällt temporär aufgrund des Kraftschlusses.
II. Schaltablauf:
   1. Lastabbau mit Öffnen der Motorkupplung,
   2. Bereichsgruppe GP:
      i. Ausschalten,
      ii. Synchronisieren, Drehzahl der Elektromaschine fällt aufgrund der Hochschaltung,
      iii. Einschalten,
   3. Hauptgruppe HG:
      i. Ausschalten,
      ii. Synchronisieren, Drehzahl der Elektromaschine steigt aufgrund der Rückschaltung,
   4. Motorkupplung Teilschließen, Drehzahl Verbrennungsmotor fällt und wird synchronisiert,
   5. Hauptgruppe:
      i. Einschalten,
   6. Splitgruppe GV:
      i. Ausschalten,
      ii. Synchronisieren, Drehzahl der Elektromaschine steigt aufgrund der Rückschaltung,
      iii. Einschalten,
   7. Motorkupplung Restschließen und Lastaufbau.
III. Schaltablauf:
   1. Lastabbau mit Öffnen der Motorkupplung,
   2. Bereichsgruppe GP:
      i. Ausschalten,
      ii. Synchronisieren, Drehzahl der Elektromaschine fällt aufgrund der Hochschaltung,
      iii. Einschalten,
   3. Hauptgruppe HG:
      i. Ausschalten,
      ii. Synchronisieren, Drehzahl der Elektromaschine steigt aufgrund der Rückschaltung,
      iii. Einschalten,
   4. Splitgruppe GV:
      i. Ausschalten,
      ii. Synchronisieren, Drehzahl der Elektromaschine steigt aufgrund der Rückschaltung,
   5. Motorkupplung Teilschließen, Drehzahl Verbrennungsmotor fällt und wird synchronisiert,
   6. Splitgruppe:
      i. Einschalten,
   7. Motorkupplung Restschließen und Lastaufbau.

## Patentansprüche

1. Verfahren zum Betreiben eines Antriebsstranges eines Fahrzeugs, mit einer Anordnung wenigstens umfassend einen Verbrennungsmotor, eine Motorkupplung, eine elektrische Maschine, ein Schaltgetriebe zum Schalten von Gängen in Ein- oder Mehrgruppenbauweise mit synchronisierten und/oder unsynchronisierten Schaltelementen, ein Achsgetriebe sowie eine zugeordnete Steuerungseinrichtung zur Steuerung von Schaltvorgängen, **dadurch gekennzeichnet, dass** die elektrische Maschine bei Schaltvorgängen im Schaltgetriebe als Synchronisiermittel, Synchronisierhilfe oder wenigstens als Schalthilfe eingesetzt wird, wobei Drehrichtungswechsel von Getriebewellen berücksichtigt werden.

2. Verfahren nach Anspruch 1, **dadurch gekennzeichnet, dass** mittels der elektrischen Maschine die Drehrichtung von ursprünglich in gleicher Drehrichtung laufender, zu korrelierender Getriebewellen angeglichen wird.

3. Verfahren nach Anspruch 1 oder 2, **dadurch gekennzeichnet, dass** bei einem durch ein unerwünschtes Rollen des Fahrzeugs entgegen einer angewählten Gangrichtung hervorgerufenen Drehrichtungswechsel einer Getriebeausgangswelle, zunächst die Drehrichtung wenigstens einer anderen, mit der Getriebeausgangswelle zu korrelierenden, in der ursprünglichen Drehrichtung laufenden Getriebewelle mittels der elektrischen Maschine an die Drehrichtung der Getriebeausgangswelle angeglichen wird.

4. Verfahren nach zumindest einem der Ansprüche 1 bis 3, **dadurch gekennzeichnet, dass** bei einem wenigstens teilweise unsynchronisierte Schaltelemente aufweisenden Mehrgruppengetriebe die elektrische Maschine unter Berücksichtigung von Drehrichtungswechseln von Getriebewellen als Synchronisiermittel zur Synchronisierung einzelner Gruppen bei der Steuerung von Schaltabläufen eingesetzt wird.

5. Verfahren nach Anspruch 4, **dadurch gekennzeichnet, dass** bei einem Mehrgruppengetriebe mit unsynchronisierten Schaltelementen ein Gangwechsel in einem seriellen Schaltablauf durchgeführt wird, wobei zunächst ein Lastabbau mit Öffnen der Motorkupplung und Auslegen eines Ursprungsganges erfolgt, anschließend die einzelnen Gruppen jeweils ausgeschaltet, mittels der elektrischen Maschine synchronisiert und wieder eingeschaltet werden, und dass abschließend ein Einlegen eines Zielganges mit Schließen der Motorkupplung und einem Lastaufbau erfolgt.

6. Verfahren nach Anspruch 5, **dadurch gekennzeichnet, dass** bei einem Dreigruppengetriebe mit einer vorgeschalteten Splitgruppe, einer mittleren Hauptgruppe und einer nachgeschalten Bereichsgruppe ein Gangwechsel mit folgenden Schritten durchgeführt wird:
a) Lastabbau mit Öffnen der Motorkupplung und Auslegen eines Ursprungsgangs,
b) Ausschalten der Splitgruppe,
c) Synchronisieren der Splitgruppe,
d) Einschalten der Splitgruppe,
e) Ausschalten der Hauptgruppe,
f) Synchronisieren der Hauptgruppe,
g) Einschalten der Hauptgruppe,
h) Ausschalten der Bereichsgruppe,
i) Synchronisieren der Bereichsgruppe,
j) Einschalten der Bereichsgruppe und
k) Einlegen eines Zielgangs mit Schließen der Motorkupplung und Lastaufbau.

7. Verfahren nach Anspruch 4, **dadurch gekennzeichnet, dass** bei einem Mehrgruppengetriebe, bei dem bei einem Gangwechsel innerhalb der Gruppen wahlweise Hoch- und Rückschaltungen erfolgen können, zur Bestimmung eines zeitminimierten Schalt- und Synchronisierungsablaufs für die Gruppen folgende Kriterien einzeln oder in Kombination berücksichtigt werden:
a) eine durchzuführende Anzahl von Drehrichtungsumkehrungen von Getriebewellen mittels der elektrischen Maschine,
b) die Größe eines jeweils mittels der elektrischen Maschine zu synchronisierenden Drehzahlbereichs,
c) die Größe eines jeweiligen Drehzahlsprungs,
d) die Richtung eines jeweiligen Drehzahlsprungs und
e) das Drehzahlniveau selbst.

8. Verfahren nach zumindest einem der Ansprüche 1 bis 7, **dadurch gekennzeichnet, dass** bei vorbestimmten Synchronisierungen die Motorkupplung wahlweise vollständig oder teilweise geschlossen wird oder vollständig oder teilweise geschlossen bleibt.

9. Verfahren nach zumindest einem der Ansprüche 4 bis 8, **dadurch gekennzeichnet, dass** aufeinander folgende Einschalt- und Ausschaltphasen von Gruppen eines Mehrgruppengetriebes bei einem Schaltablauf wahlweise voneinander getrennt oder zeitlich überschneidend erfolgen.

10. Verfahren nach zumindest einem der Ansprüche 4 bis 9, **dadurch gekennzeichnet, dass** bei auftretenden Zahn-auf-Zahn-Stellungen die Schaltung fortgesetzt wird, wobei in der betreffenden Gruppe des Mehrgruppengetriebes die elektrische Maschine weiterhin bzw. verändert derart angesteuert und betrieben wird, bis die entsprechenden Zahnräder regulär im Eingriff stehen und die jeweilige Zahn-auf-Zahn-Stellung beseitigt ist.

11. Antriebsstrang eines Fahrzeugs, wenigstens umfassend einen Verbrennungsmotor, eine Motorkupplung, eine elektrische Maschine, ein Schaltgetriebe zum Schalten von Gängen in Ein- oder Mehrgruppenbauweise mit synchronisierten und/oder unsynchronisierten Schaltelementen, ein Achsgetriebe sowie eine zugeordnete Steuerungseinrichtung zur Steuerung von Schaltvorgängen, insbesondere zur Durchführung eines Verfahrens nach einem der Ansprüche 1 bis 10, **dadurch gekennzeichnet, dass** die elektrische Maschine bei einem Drehrichtungswechsel einer oder mehrerer Getriebewellen während eines Schaltvorganges als Synchronisiermittel, Synchronisierhilfe oder wenigstens als Schalthilfe entsprechend ansteuerbar und mit jeweiligen aufgrund des Drehrichtungswechsels zu beaufschlagenden Getriebewellen über vorgesehene kraftschlüssige Verbindungsmittel wirkverbindbar ist.

12. Fahrzeug mit einem Antriebsstrang nach Anspruch 11 zur Durchführung eines Verfahrens nach zumindest einem der Ansprüche 1 bis 10.

## Claims

1. Method for operating a drivetrain of a vehicle, with an arrangement at least comprising an internal combustion engine, an engine clutch, an electric machine, a shift transmission for shifting gears of single-group or multi-group design with synchronized and/or unsynchronized shift elements, an axle transmission and an assigned control device for controlling shift operations, **characterized in that** the electric machine is used in the case of shift operations in the shift transmission as a synchronizing means, synchronizing aid or at least as a shift aid, wherein changes in the direction of rotation of transmission shafts are taken into account.

2. Method according to Claim 1, **characterized in that** the direction of rotation of transmission shafts, which run originally in the same direction of rotation and which are to be correlated, is adjusted by means of the electric machine.

3. Method according to Claim 1 or 2, **characterized in that**, in the case of a change in the direction of rotation of a transmission output shaft caused by an undesired rolling of the vehicle counter to a selected gear direction, initially the direction of rotation of at least one different transmission shaft, which is to be correlated with the transmission output shaft and runs in the original direction of rotation, is adjusted by means of the electric machine to the direction of rotation of the transmission output shaft.

4. Method according to at least one of Claims 1 to 3, **characterized in that**, in the case of a multi-group transmission having at least partially unsynchronized shift elements, the electric machine is used, taking into account changes in the direction of rotation of transmission shafts, as synchronizing means for synchronizing individual groups in the control of shift procedures.

5. Method according to Claim 4, **characterized in that**, in the case of a multi-group transmission with unsynchronized shift elements, a gear change is carried out in a serial shift procedure, wherein initially a reduction in load is carried out with the opening of the engine clutch and disengagement of an original gear, subsequently the individual groups are in each case switched off, synchronized by means of the electric machine and switched on again, and that subsequently an engagement of a target gear is carried out with the closing of the engine clutch and a build-up of load.

6. Method according to Claim 5, **characterized in that**, in the case of a three-group transmission with an upstream split group, a central main group and a downstream range group, a gear change with the following steps is carried out:
a) reducing load with the opening of the engine clutch and disengagement of an original gear,
b) switching off the split group,
c) synchronizing the split group,
d) switching on the split group,
e) switching off the main group,
f) synchronizing the main group,
g) switching on the main group,
h) switching off the range group,
i) synchronizing the range group,
j) switching on the range group and
k) engaging a target gear with closing of the engine clutch and build-up of load.

7. Method according to Claim 4, **characterized in that**, in the case of a multi-group transmission, in which optionally upshifts and downshifts can be carried out in the case of a gear change within the groups, the following criteria are taken into account individually or in combination for the determination of a time-minimized shift and synchronization procedure for the groups:
a) a number of reversals in the direction of rotation of transmission shafts to be carried out by means of the electric machine,
b) the size of a rotational speed range to be synchronized in each case by means of the electric machine,
c) the size of a respective jump in rotational speed,
d) the direction of a respective jump in rotational speed and
e) the rotational speed level itself.

8. Method according to at least one of Claims 1 to 7, **characterized in that**, in the case of previously determined synchronizations, the engine clutch is optionally fully or partially closed or remains fully or partially closed.

9. Method according to at least one of Claims 4 to 8, **characterized in that** consecutive switching on and switching off phases of groups of a multi-group transmission in the case of a shift procedure are carried out optionally separately from one another or at the same time as one another.

10. Method according to at least one of Claims 4 to 9, **characterized in that**, in the event of tooth-on-tooth positions occurring, the shifting is continued, wherein the electric machine is actuated and operated further or in a changed manner in the relevant group of the multi-group transmission until the corresponding gear wheels are regularly in engagement and the respective tooth-on-tooth position is eliminated.

11. Drivetrain of a vehicle, at least comprising an internal combustion engine, an engine clutch, an electric machine, a shift transmission for shifting gears of single-group or multi-group design with synchronized and/or unsynchronized shift elements, an axle transmission and an assigned control device for controlling shift operations, in particular for carrying out a method according to one of Claims 1 to 10, **characterized in that** the electric machine can be correspondingly actuated in the case of a change in the direction of rotation of one or more transmission shafts during a shift operation as a synchronizing means, synchronizing aid or at least as a shift aid and is operatively connected via provided non-positive connection means to respective transmission shafts to be acted upon as a result of the change in the direction of rotation.

12. Vehicle with a drivetrain according to Claim 11 for carrying out a method according to at least one of Claims 1 to 10.

## Revendications

1. Procédé pour faire fonctionner la chaîne cinématique d'un véhicule, comprenant un agencement comprenant au moins un moteur à combustion interne, un embrayage-moteur, une machine électrique, une boîte de vitesses pour passer des vitesses de construction à groupe simple ou groupes multiples avec des éléments de commutation synchronisés et/ou non synchronisés, un engrenage différentiel ainsi qu'un dispositif de commande associé pour commander des opérations de commutation, **caractérisé en ce que** la machine électrique est utilisée pour des opérations de commutation dans la boîte de vitesses en tant que moyen de synchronisation, auxiliaire de synchronisation ou au moins en tant qu'auxiliaire de commutation, des changements de sens de rotation des arbres de transmission étant pris en compte.

2. Procédé selon la revendication 1, **caractérisé en ce que** le sens de rotation d'arbres de transmission à corréler, tournant initialement dans le même sens de rotation, est ajusté au moyen de la machine électrique.

3. Procédé selon la revendication 1 ou 2, **caractérisé en ce que** dans le cas d'un changement de sens de rotation d'un arbre de sortie de boîte de vitesses provoqué par un roulage accidentel du véhicule dans le sens opposé à un sens de marche sélectionné, le sens de rotation d'au moins un autre arbre de transmission à corréler avec l'arbre de sortie de boîte de vitesses, tournant dans le sens de rotation initial, est ajusté au moyen de la machine électrique au sens de rotation de l'arbre de sortie de boîte de vitesses.

4. Procédé selon au moins l'une quelconque des revendications 1 à 3, **caractérisé en ce que** dans le cas d'une boîte de vitesses à groupes multiples présentant au moins en partie des éléments de commutation non synchronisés, la machine électrique est utilisée en tenant compte de changements de sens de rotation d'arbres de transmission, en tant que moyen de synchronisation pour la synchronisation de groupes individuels lors de la commande d'opérations de commutation.

5. Procédé selon la revendication 4, **caractérisé en ce que** dans le cas d'une boîte de vitesses à groupes multiples avec des éléments de commutation non synchronisés, un changement de vitesse est effectué dans une opération de commutation en série, une diminution de charge se produit initialement avec ouverture de l'embrayage-moteur et sortie d'une vitesse initiale, puis les groupes individuels sont respectivement déconnectés, synchronisés au moyen de la machine électrique et à nouveau reconnectés, et **en ce qu'**un enclenchement de la vitesse cible se produit finalement avec la fermeture de l'embrayage-moteur et avec une augmentation de la charge.

6. Procédé selon la revendication 5, **caractérisé en ce que** dans le cas d'une boîte de vitesses à trois groupes, avec un doubleur de gamme monté en amont, un groupe principal central et un groupe-relais monté en aval, un changement de vitesse est effectué avec les étapes suivantes :
a) diminution de la charge avec ouverture de l'embrayage-moteur et sortie d'une vitesse initiale,
b) déconnexion du doubleur de gamme,
c) synchronisation du doubleur de gamme,
d) reconnexion du doubleur de gamme,
e) déconnexion du groupe principal,
f) synchronisation du groupe principal,
g) reconnexion du groupe principal,
h) déconnexion du groupe-relais,
i) synchronisation du groupe-relais,
j) reconnexion du groupe-relais et
k) enclenchement d'une vitesse cible avec fermeture de l'embrayage-moteur et augmentation de la charge.

7. Procédé selon la revendication 4, **caractérisé en ce que** dans le cas d'une boîte de vitesses à plusieurs groupes, dans laquelle, lors d'un changement de vitesse à l'intérieur des groupes, des passages à une vitesse supérieure ou inférieure peuvent avoir lieu, pour déterminer une opération de commutation et de synchronisation en temps minimum pour les groupes, les critères suivants sont pris en compte individuellement ou en combinaison :
a) un nombre d'inversions de sens de rotation d'arbres de transmission à effectuer au moyen de la machine électrique,
b) l'ampleur d'une plage de régime à synchroniser à chaque fois par la machine électrique,
c) l'ampleur d'un saut de régime respectif,
d) le sens d'un saut de régime respectif, et
e) le niveau proprement dit du régime.

8. Procédé selon au moins l'une quelconque des revendications 1 à 7, **caractérisé en ce que** dans le cas de synchronisations prédéterminées, l'embrayage-moteur est fermé de manière sélective complètement ou en partie, ou reste fermé complètement ou en partie.

9. Procédé selon au moins l'une quelconque des revendications 4 à 8, **caractérisé en ce que** des phases de connexion et de déconnexion successives de groupes d'une boîte de vitesses à plusieurs groupes ont lieu lors d'une opération de commutation de manière sélective de manière séparée les unes des autres ou en se recoupant dans le temps.

10. Procédé selon au moins l'une quelconque des revendications 4 à 9, **caractérisé en ce que** dans le cas de positions dent sur dent se produisant, la commutation se poursuit, la machine électrique étant commandée et entraînée de manière identique ou différente dans le groupe concerné de la boîte de vitesses à plusieurs groupes, jusqu'à ce que les roues dentées correspondantes soient en prise régulière et que la position dent sur dent respective soit supprimée.

11. Chaîne cinématique d'un véhicule, comprenant au moins un moteur à combustion interne, un embrayage-moteur, une machine électrique, une boîte de vitesses pour passer des vitesses de construction à groupe simple ou groupes multiples avec des éléments de commutation synchronisés et/ou non synchronisés, un engrenage différentiel ainsi qu'un dispositif de commande associé pour commander des opérations de commutation, en particulier pour mettre en ouvre un procédé selon l'une quelconque des revendications 1 à 10, **caractérisée en ce que** la machine électrique peut être commandée de manière correspondante dans le cas d'un changement de sens de rotation d'un ou de plusieurs arbres de transmission pendant une opération de commutation en tant que moyen de synchronisation, auxiliaire de synchronisation ou au moins en tant qu'auxiliaire de commutation, et peut être amenée en liaison fonctionnelle avec des arbres de transmission respectifs devant être sollicités sur la base du changement de sens de rotation, par le biais de moyens de connexion par engagement par force prévus.

12. Véhicule comprenant une chaîne cinématique selon la revendication 11 pour mettre en oeuvre un procédé selon au moins l'une quelconque des revendications 1 à 10.
